# EUROPÄISCHE PATENTSCHRIFT

(11) **EP 4 395 949 B1**
(45) Veröffentlichungstag und Bekanntmachung des Hinweises auf die Patenterteilung: **05.08.2026**
(21) Anmeldenummer: 22769952.7
(22) Anmeldetag: 30.08.2022
(51) Int. Cl.: B21H 8/00, B21D 13/04, H01M 8/0206

(54) **VERFAHREN UND VORRICHTUNG ZUR UMFORMUNG VON FOLIEN IN DREIDIMENSIONAL STRUKTURIERTE FLÄCHENBAUTEILE**
METHOD AND APPARATUS FOR SHAPING FOILS INTO THREE-DIMENSIONALLY STRUCTURED FLAT COMPONENTS
PROCÉDÉ ET DISPOSITIF DE FAÇONNAGE DE FEUILLES DANS DES COMPOSANTS PLATS STRUCTURÉS EN TROIS DIMENSIONS

(30) Priorität: 30.08.2021 DE 102021122402
(43) Veröffentlichungstag der Anmeldung: 10.07.2024
(73) Patentinhaber: Fraunhofer-Gesellschaft zur Förderung der angewandten Forschung e.V., 80686 München (DE)
(72) Erfinder: POLSTER, Stefan, 09126 Chemnitz (DE); REUTHER, Franz, 09126 Chemnitz (DE); MELZER, Sebastian, 09126 Chemnitz (DE); PORSTMANN, Sebastian, 09126 Chemnitz (DE); NAGEL, Matthias, 09126 Chemnitz (DE); KURTH, Robin, 09126 Chemnitz (DE); HOFFMANN, Dirk, 09126 Chemnitz (DE); PÄSSLER, Thomas, 09126 Chemnitz (DE); SCHEFFLER, Sören, 09126 Chemnitz (DE)
(74) Vertreter: Grünecker Patent- und Rechtsanwälte PartG mbB
(86) Internationale Anmeldenummer: PCT/EP2022/074008
(87) Internationale Veröffentlichungsnummer: WO 2023/031147

(56) Entgegenhaltungen:
- EP-A1- 2 312 678
- WO-A1-2020/094627
- WO-A1-2022/194322
- CN-B- 105 514 460
- KR-A- 20210 067 193
- PORSTMANN S ET AL: "A comprehensive comparison of state-of-the-art manufacturing methods for fuel cell bipolar plates including anticipated future industry trends", JOURNAL OF MANUFACTURING PROCESSES, SOCIETY OF MANUFACTURING ENGINEERS, DEARBORN, MI, US, vol. 60, 2 November 2020 (2020-11-02), pages 366 - 383, XP086371769, ISSN: 1526-6125, [retrieved on 20201102], DOI: 10.1016/J.JMAPRO.2020.10.041

## Beschreibung

Die vorliegende Erfindung betrifft ein Verfahren und eine Vorrichtung zur Umformung von Folien in dreidimensional strukturierte Flächenbauteile, insbesondere in dünne strukturierte Blechbauteile wie Bipolarplatten für Brennstoffzellen.

Metallische Bipolarplatten (BBP} stellen eine der wesentlichen Hauptkomponenten eines Brennstoffzellen-Systems dar. Insbesondere beschichtete BPP aus rostfreier Edelstahlfolie eignen sich für die Anwendung in Fahrzeugen. Sie können nicht nur dünner dimensioniert werden als alternativ einsetzbare Werkstoffe, sondern ermöglichen zugleich eine umformende Herstellung mit hohen Produktionsraten.

Nachteilig und daher hinderlich für einen breiteren Einsatz der Wasserstofftechnologie im Automobilsektor sind laut einer wissenschaftlichen Publikation (Hirano, S.: R&D für Automotive PEM Fuel Cell System - Bipolar Plates, DOE Workshop on Research and Development Needs for Bipolar Plates for PEM Fuel Cell Technologies, 2017 Michigan) die aktuell hohen Systemkosten. Hauptkostentreiber bei PEM-Brennstoffzellen - Stacks sind die Membran-Elektroden-Einheiten (MEA) und die BPP.

Deshalb ist die Entwicklung von Produktionstechnologien zur Herstellung von dünnen, umformend strukturierten, metallischen Bauteilen für den Massenmarkt eine wesentliche Voraussetzung für die breite Nutzung von Wasserstoff im Automobilbereich.

Für die Herstellung von dünnen, umformend strukturierten, metallischen Bauteilen eignen sich zur Formgebung nach aktuellem Stand der Technik vorrangig Hydroforming (Vorteil: bessere Ausformung und Ebenheit, Nachteil: geringe Stückzahlen) und Hohlprägen (Vorteil: höhere Stückzahlen, Nachteil: schlechtere Umformergebnisse). Hohe Produktionsraten würden sich mit diesen Fertigungsverfahren derzeit nur mit vielzähligen Einzelanlagen in parallelen Fertigungssträngen abbilden lassen.

In einer anderen wissenschaftlichen Publikation (James, B.; Huya-Kouadio, J.; Houchins, C.: Bipolar Plate Cost and Issues at High Production Rate, DOE Workshop on Research and Development Needs for Bipolar Plates for PEM Fuel Cell Technologies, 2017 Michigan) wurde als möglicher Ansatz zur Steigerung der Produktionsrate die Entwicklung neuer, kontinuierlicher Prozesse identifiziert, welche Produktionsraten von mehr als 60 Teilen pro Minute pro strukturierten, metallischen Bauteil erlauben.

Einen vielversprechenden Ansatz für eine kontinuierliche Fertigung von dünnen, umformend strukturierten, metallischen Bauteilen bildet die Formgebung durch Walzverfahren, wobei bisher lediglich eine geringe Anzahl von Untersuchungen zu diesem Verfahren bekannt sind, die jedoch die prinzipielle Machbarkeit zeigen konnten. Dies ging aus diversen wissenschaftlichen Publikationen hervor:
Bauer, A., Härtel, S. and Awiszus, B.: Manufacturing of Metallic Bipolar Plate Channels by Rolling, JMMP(OPJ), June 2019
Bauer, A.: Experimentelle und numerische Untersuchungen zur Analyse der umformtechnischen Herstellung metallischer Bipolarplatten, Dissertation, Technische Universität Chemnitz, 2020
Zhang, P. et al: Deformation in Micro Roll Forming of Bipolar Plate, 2017 J. Phys.: Conf. Ser. 896 012115, doi :10.1088/1742-6596/896/1/012115

Ein Verfahren und eine Vorrichtung sind u.a. aus der KR 101321125B bekannt. Bei dem bekannten Verfahren wird eine Folie in einem Strang zwischen einem Oberwerkzeug und einem Unterwerkzeug einer Presse eingebracht. Die Presse verleiht der Folie eine dreidimensionale Struktur und formt diese in ein dreidimensional strukturiertes Flächenbauteil in Gestalt einer Bipolarplatte für Brennstoffzellen um. Die EP 2312678A1 offenbart ein Verfahren nach dem Oberbegriff des Anspruchs 1 und eine Vorrichtung nach dem Oberbegriff des Anspruchs 10.

Aufgabe der Erfindung ist es daher, ein Verfahren und eine Vorrichtung zu beschreiben, mit denen die wirtschaftliche Herstellung strukturierter Flächenbauteile für den Massenmarkt, insbesondere für die perspektivische Anwendung als Bipolarhalbplatte bzw. Bipolarplatte, ermöglicht wird.

Zur Lösung dieser Aufgabe stellt die Erfindung das Verfahren nach Anspruch 1 und die Vorrichtung nach Anspruch 10 bereit.

Das hierin offenbarte Verfahren dient zur Umformung von Folien in dreidimensional strukturierte Flächenbauteile, insbesondere in Bipolarplatten (oder Bipolarhalbplatten, von denen je zwei zu einer Bipolarplatte verbunden werden) für Brennstoffzellen, wobei wenigstens ein Abschnitt einer Folie mit einer Zugspannung beaufschlagt und unter Erzeugung einer dreidimensionalen Struktur umgeformt wird, wobei die Folie während der Umformung kontinuierlich entlang einer Förderrichtung gefördert wird, wobei zur Beaufschlagung der Folie mit der Zugspannung eine Zugkraft in Förderrichtung auf die Folie aufgebracht wird, und wobei die dreidimensionale Struktur eine unebene Struktur ist, die in Förderrichtung der Folie uneinheitlich ist.

Im Gegensatz zu dem aus der KR 101321125B bekannten Verfahren ist kein Stillstand der Förderbewegung während des Umformens der Folie erforderlich. So entfallen auch die Zeiten zum Abbremsen und Anfahren der Fördervorrichtung. Die Produktivität des erfindungsgemäßen Verfahrens kann dadurch im Vergleich zum Stand der Technik erheblich verbessert werden.

Es kann praktisch sein, wenn die Umformung durch Walzen, insbesondere durch Prägewalzen, erfolgt, vorzugsweise in wenigstens einem Walzenspalt eines Walzenpaars, wobei bevorzugt ein Zuführwinkel der Folie zu einer Ebene dieses Walzenspalts im Bereich zwischen 0° und 90°, vorzugsweise im Bereich zwischen 0 und 30° liegt, wobei der Zuführwinkel der Folie zu der Ebene dieses Walzenspalts besonders bevorzugt verstellbar ist, insbesondere, um eine mögliche Faltenbildung durch ein voreilig eingreifendes Werkzeug mit hervorstehender Gravur gezielt zu verhindern.

Der Zuführwinkel bezeichnet den Winkel, den die Folie zu der Ebene dieses Walzenspalts aufweist. Es ist möglich, dass der Zuführwinkel so groß ist, dass die Folie an einer der Prägewalzen, insbesondere der Prägewalze mit der Negativform, umfangsseitig anliegt. Der Winkel bezüglich der Drehachse dieser Prägewalze, über welchen die Folie an der Prägewalze anliegt, wird als Umschlingungswinkel bezeichnet. Der Umschlingungswinkel kann im Bereich von 0 bis 180°, insbesondere im Bereich von 0 bis 90° liegen. Wenn die Folie also über ein Viertel der Umfangslänge an der Prägewalze anliegt, beträgt der Umschlingungswinkel 90°.

Die in den Ansprüchen angegebenen Werte beziehen sich auf den Winkelbetrag und enthalten keine Beschränkung, in welcher Richtung der Winkel gemessen wird.

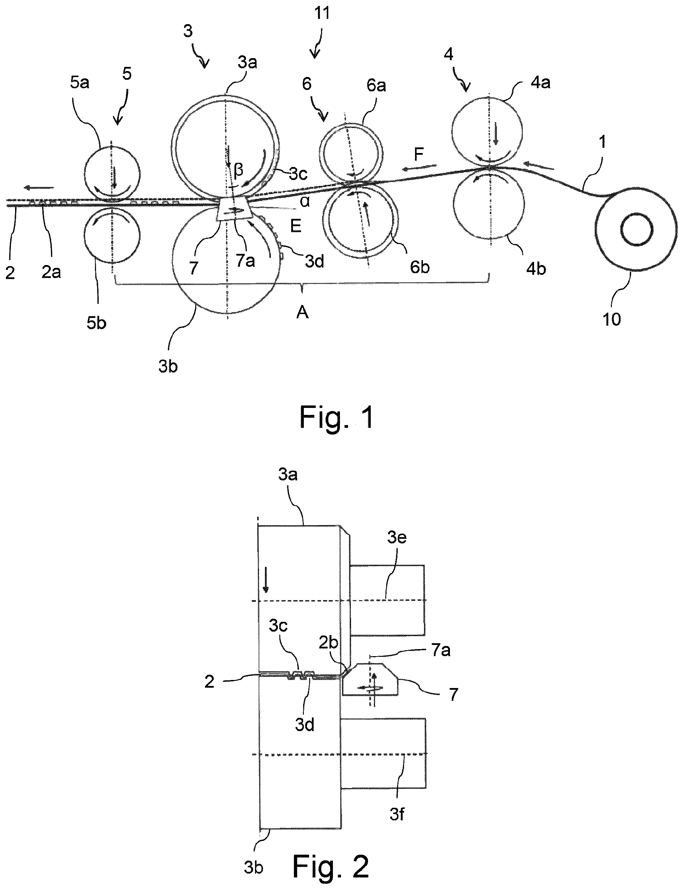

Der Zuführwinkel wird vorzugsweise ausgehend von der Ebene des Walzenspalts in Richtung der negativ geformten Prägewalze (in Fig. 1 oben) gemessen. Der absolute Zuführwinkel kann daher nicht nur im positiven Bereich von 0 bis 180° liegen, sondern auch kleiner als 0° sein bzw. im Bereich 0 bis -180°, insbesondere im Bereich von 0 bis -90° liegen, wenn die Folie von der Seite der positiv geformten Prägewalze (in Fig. 1 unten) zugeführt wird.

Entsprechendes gilt für den Umschlingungswinkel. Der absolute Umschlingungswinkel kann auch im negativen Bereich von 0 bis -180°, insbesondere im Bereich von 0 bis -90° liegen, wenn die Folie an der positiv geformten Prägewalze (in Fig. 1 unten) anliegt. Hierbei ist aber gerade bei besonders dünnen Folie auch Sorge dafür zu tragen, dass die Folie nicht bereits vor der Prägung im Walzenspalt ungewollt verformt wird.

Erfindungsgemäß wird zur Beaufschlagung der Folie mit der Zugspannung eine Zugkraft quer zu der Förderrichtung auf die Folie aufgebracht. Dadurch wird die Gefahr einer Faltenbildung in der Folie erheblich verringert. Zudem kann durch Spannen der Folie (z.B. analog zu einem Tischtuch, das über die Längs- und Querkanten einer rechteckigen Tischplatte in Längs- und Breitenrichtung gespannt wird) die gewünschte dreidimensionale Struktur besser und genauer auf die Folie übertragen werden.

Es kann sich als vorteilhaft erweisen, wenn die umzuformende Folie zur Beaufschlagung mit einer, in Förderrichtung (längs) wirkenden Zugspannung zwischen zwei Spannvorrichtungen gespannt wird, wobei jede der Spannvorrichtungen vorzugsweise als Walzenpaar ausgebildet ist, welches die Folie bevorzugt durch den zwischen gegenläufig rotierenden Walzen gebildeten Walzenspalt in Förderrichtung fördert. Es kann sich als hilfreich erweisen, den Betrag der wirkenden Zugspannung durch geeignete Maßnahmen in beiden Spannvorrichtungen derart zu steuern, besser zu regeln, dass keine plastische Verformung des Materials im Bereich der Bandzuführung auftritt. Vorteilhafterweise tritt dabei kein Schlupf zwischen Spannvorrichtung und Folie auf, um dessen Oberfläche nicht negativ zu beeinträchtigen.

Es kann nützlich sein, wenn die Folie zur Beaufschlagung mit einer quer zur Förderrichtung wirkenden Zugspannung mit einer sich kontinuierlich in Förderrichtung erstreckenden, zweidimensionalen Längsstruktur versehen wird, wobei die zweidimensionale Längsstruktur eine unebene Struktur ist, die in Förderrichtung der Folie einheitlich ist, und wobei die Folie vorzugsweise an einem der oder an beiden Längsrändern gefalzt wird und/oder an wenigstens einen konisch geformten Abschnitt einer Förderwalze, bevorzugt einer die umformtechnische Strukturierung bewirkenden Prägewalze, angedrückt wird, besonders bevorzugt mittels einer separaten Andrückwalze. Durch die sich kontinuierlich in Förderrichtung erstreckende, zweidimensionale Längsstruktur wird bei gleichbleibender Breite der Folie die Zugspannung innerhalb der Folie quer zur Förderrichtung erhöht. Hierbei kann die Folie beispielsweise längsrandseitig gefalzt werden. Zu diesem Zweck können die Längsränder der Folie, welche die Folie quer zur Förderrichtung definieren, aus der Folienebene herausgebogen werden. Alternativ oder zusätzlich ist es auch möglich, dass die zur Beaufschlagung der Folie mit der gewünschten Querzugspannung erzeugte, zweidimensionale Struktur bereits Elemente (z.B. Kanäle, Wellungen, Vertiefungen, Stege, etc.) der gewünschten dreidimensionalen Struktur enthält bzw. vorgibt, wobei die dreidimensionale Struktur später ausgehend von der zweidimensionalen Struktur im Rahmen der Umformung der Folie erzeugt wird. Die zweidimensionale Struktur umfasst ein in Förderrichtung konstantes Querschnittsprofil mit Vertiefungen und/oder Erhebungen bzgl. der Folienebene. Das in Förderrichtung konstante Querschnittsprofil der Folie kann dann im Rahmen der dreidimensionalen Strukturierung mit einer in Förderrichtung veränderlichen Struktur überlagert werden.

Weiterhin kann eine solche Querspannung durch geeignete (Mikro-)Strukturierung der bauteilberührenden Oberfläche der Andrückwalze sowie deren vorteilhafterweise selbstangetriebenen Eigenrotation erzeugt werden.

Es kann sich als günstig erweisen, wenn die Andrückwalze zur Veränderung der auf die Folie wirkenden Zugspannung entlang und/oder quer zu deren Rotationsachse verstellt wird, wobei die Rotationsachse der Andrückwalze vorzugsweise exakt oder näherungsweise senkrecht zu einer Ebene, in welcher die Folie der Förderwalze zugeführt wird, ausrichtbar ist. Wie insbesondere in Figur 2 dargestellt ist, kann durch Verstellen der Andrückwalze gegenüber der die dreidimensionale Struktur erzeugenden Prägewalze ein entsprechender Längsrand der Folie mehr oder weniger aus der Folienebene herausgebogen werden. Dadurch lässt sich die Querzugspannung innerhalb der Folie insbesondere im Umformbereich der Folie gezielt beeinflussen.

Es kann zweckdienlich sein, wenn als Folie eine Metallfolie, vorzugsweise eine Edelstahlfolie, bevorzugt eine beschichtete Edelstahlfolie verwendet wird, vorzugsweise mit einer Dicke von bis zu 1 mm. Metallfolien, insbesondere im Bereich zwischen 0,02 bis 1,0 mm Dicke, vorzugsweise 0,05 bis 0,5 mm Dicke lassen sich insbesondere im Walzprägeverfahren leicht umformen. Zur Herstellung von Bipolarplatten werden vorzugsweise metallische Folien mit einer Dicke im Bereich von 0,02 bis 0, 5 mm verwendet. Derart dünne Folien sind vergleichsweise empfindlich und neigen zur Riss- und/oder Faltenbildung. Zur Vermeidung von Riss- und/oder Faltenbildung kommt der Regelung und/oder Steuerung der Prozessparameter eine besondere Bedeutung zu.

Es kann hilfreich sein, wenn die Folie, vorzugsweise nach der umformtechnischen Strukturierung, in einzelne Flächenbauteile zerteilt wird, bevorzugt durch quer zur Förderrichtung verlaufende Schnitte.

Ein weiterer Aspekt der Erfindung betrifft eine Vorrichtung zur Umformung von Folien in dreidimensional strukturierte Flächenbauteile, insbesondere in Bipolarplatten zur Verwendung in Brennstoffzellen, vorzugsweise unter Ausführung des Verfahrens nach einer der vorangehenden Ausführungen, wobei die Vorrichtung konfiguriert ist, um einen Abschnitt der Folie mit einer Zugspannung zu beaufschlagen sowie unter Erzeugung der dreidimensionalen Struktur umzuformen, wobei die Vorrichtung konfiguriert ist, um die Folie, insbesondere während der Umformung, kontinuierlich entlang der Förderrichtung zu fördern, wobei die Vorrichtung konfiguriert ist zur Beaufschlagung der Folie mit einer Zugspannung in Förderrichtung, und wobei die dreidimensionale Struktur eine unebene Struktur ist, die in Förderrichtung der Folie uneinheitlich ist. Die erfindungsgemäße Vorrichtung ist gekennzeichnet durch eine Querspannvorrichtung zur Beaufschlagung der Folie mit einer Zugspannung quer zur Förderrichtung.

Mit der erfindungsgemäßen Vorrichtung ergeben sich dieselben Vorteile wie bei dem erfindungsgemäßen Verfahren.

Es kann sinnvoll sein, wenn die Vorrichtung wenigstens eine der folgenden Einrichtungen umfasst:
- Eine Umformeinrichtung zur Erzeugung der dreidimensionalen Struktur durch Umformung der Folie, vorzugsweise eine Prägewalzeinrichtung, bevorzugt ein Prägewalzenpaar mit gegenläufig rotierenden Prägewalzen mit korrespondierenden Prägeprofilen, wobei die Prägewalzen besonders bevorzugt einen Walzenspalt bilden und bei Förderung der Folie durch den Walzenspalt die dreidimensionale Struktur in die Folie einprägen.
- Eine Zuführeinrichtung zur Zuführung der Folie zur Umformeinrichtung, vorzugsweise eine Zuführwalzeinrichtung, bevorzugt ein Zuführwalzenpaar mit gegenläufig rotierenden Zuführwalzen, die einen Walzenspalt bilden und bei Förderung der Folie durch den Walzenspalt eine Zugkraft entgegen der Förderrichtung auf die Folie ausüben, wobei bevorzugt die Zuführwalzvorrichtung der Umformeinrichtung in Förderrichtung der Folie vorgelagert ist.
- Eine Abfördereinrichtung zum Abfördern der Folie von der Umformeinrichtung, vorzugsweise eine Wegführwalzeinrichtung, bevorzugt ein Wegführwalzenpaar mit gegenläufig rotierenden Wegführwalzen, die einen Walzenspalt bilden und bei Förderung der Folie durch den Walzenspalt eine Zugkraft in Förderrichtung auf die Folie ausüben, wobei bevorzugt die Wegführwalzvorrichtung der Umformeinrichtung in Förderrichtung der Folie nachgelagert ist.
- Eine Formwalzeinrichtung, bevorzugt ein Formwalzenpaar mit gegenläufig rotierenden Formwalzen, die einen Walzenspalt bilden und bei Förderung der Folie durch den Walzenspalt eine quer zur Förderrichtung wirkende Zugkraft auf die Folie ausüben, vorzugsweise durch Erzeugen einer sich kontinuierlich in Förderrichtung erstreckenden, zweidimensionalen Längsstruktur in der Folie, wobei die zweidimensionale Längsstruktur eine unebene Struktur ist, die in Förderrichtung der Folie einheitlich ist, und wobei bevorzugt die Querspannvorrichtung der Umformeinrichtung in Förderrichtung der Folie vorgelagert ist.
- Wenigstens eine Andrückeinrichtung, die dazu konfiguriert sind, den Randbereich der Metallfolie zu klemmen und zu führen, wobei eine Rotationsachse einer Andrückwalze sich von der Richtung der Rotationsachse der Prägewalzvorrichtung unterscheidet.
- Eine Schneideinrichtung, um die Folie in dreidimensional strukturierte Flächenbauteile zu zerschneiden, wobei bevorzugt die Schneideinrichtung der Umformeinrichtung in Förderrichtung der Folie nachgelagert ist.
- Eine Einrichtung zur Verstellung des Zuführwinkels der Folie zur Ebene des Walzenspalts und/oder zur Verstellung des Umschlingungswinkels der Folie bezüglich einer Drehachse einer Prägewalze, insbesondere der negativ geformten Prägewalze.
- Eine Messeinrichtung zur Überwachung wenigstens eines der Prozess- und/oder Qualitätsparameter wenigstens einer der vorstehend genannten Einrichtungen, vorzugsweise Drehzahl, Drehmoment, Zuführwinkel, Umschlingungswinkel, Folienfaltenbildung oder Zugkraft.
- Eine Einrichtung zur Regelung und/oder Steuerung, insbesondere zur Synchronisation, der Prozessparameter wenigstens einer der vorstehend genannten Einrichtungen, wie beispielsweise Drehzahl, Drehmoment und/oder zur Optimierung der Prozessparameter durch Anpassung der Steuerung basierend auf den Messwerten der Messvorrichtung.

Beispielsweise erfolgt die Aufbringung der Zugkraft von einer Walze auf die Folie über ein Moment, welches aktiv (bspw. mittels eines Elektromotors) oder passiv (bspw. mittels einer Bremseinrichtung) erzeugt wird, oder mit einer Kombination aus aktiv und passiv erzeugten Momenten.

Eine vorstehend genannte Einrichtung zur automatisierten Verstellung des Winkels kann den Zuführwinkel und/oder den Umschlingungswinkel beispielsweise aktiv (bspw. durch einen translatorischen oder rotatorischen Verstellmechanismus mit entsprechender Aktorik, welche bspw. ein Elektromotor oder ein Pneumatikzylinder sein kann) oder passiv (bspw. mittels eines entsprechenden Feder-Gelenk-Mechanismus) einstellen.

Idealerweise erfolgt die Regelung und/oder Steuer und der Prozessparameter so, dass - abgesehen von der gewünschten dreidimensionalen Strukturierung der Folie - keine plastische Verformung der Folie auftritt. Die auf die Folie wirkende Zugspannung sollte so gewählt sein, dass sich die Folie ohne Faltenbildung konturnah an die Prägewalze anlegt, darf aber die materialeigenen Belastungsgrenzen nicht überschreiten. So sind die Prozessparameter in Abhängigkeit der Folie, insbesondere des Folienmaterials und der Foliendicke, individuell anzupassen. Zudem ist die Fördergeschwindigkeit der Folie vorzugsweise identisch zur Umfangsgeschwindigkeit der Förderwalzen, sodass kein Schlupf zwischen Walze und Folie auftritt.

Vorzugsweise ist wenigstens eines der Walzenpaare, insbesondere das formgebende Prägewalzenpaar, untereinander und/oder zu wenigstens einem der anderen Walzenpaare synchronisierbar, bevorzugt im Hinblick auf Umlaufgeschwindigkeit und/oder Lage.

Weitere vorteilhafte Weiterbildungen der Erfindung ergeben sich durch Kombinationen der Merkmale, die in den Ansprüchen, den Figuren und in der Beschreibung offenbart sind.

### Begriffe und Definitionen

Der Begriff Folie meint ein homogenes Flächengebilde aus sehr dünnem Metall oder Kunststoff.

Der Begriff Längszugspannung meint eine in Förderrichtung der Folie innerhalb deren Erstreckungsebene wirkende Zugspannung.

Der Begriff Querzugspannung meint eine quer, insbesondere senkrecht zur Förderrichtung innerhalb deren Erstreckungsebene der Folie wirkende Zugspannung.

Der Begriff Umformen meint ein Verfahren, bei welchem die Folie gezielt in eine andere Form gebracht wird, ohne dabei Material von der Folie zu entfernen oder hinzuzugeben, idealerweise auch ohne Volumenänderung der Folie. Die Folie behält ihre Masse und ihren Zusammenhalt bei.

Der Begriff zweidimensionale Struktur bezeichnet eine durch Umformung erzeugte, unebene Struktur der Folie, die in Förderrichtung der Folie einheitlich ist.

Der Begriff dreidimensionale Struktur bezeichnet eine durch Umformung erzeugte, unebene Struktur der Folie, die in Förderrichtung der Folie uneinheitlich ist.

Der Begriff Flächenbauteil meint ein Bauteil mit im Wesentlichen plattenförmiger Ausdehnung. Das Verhältnis von Länge und/oder Breite zu Dicke des Bauteils ist vorzugsweise größer als 10, bevorzugt größer als 100.

### Kurze Beschreibung der Figuren

Es zeigen:
Fig. 1 eine schematische Seitenansicht des erfindungsgemäßen Verfahrens und der erfindungsgemäßen Vorrichtung.
Fig. 2 ein Detail der erfindungsgemäßen Vorrichtung aus Fig. 1, und insbesondere eine Prinzipskizze einer Walzstufe zum Walzprägen der dreidimensionalen Struktur.

### Detaillierte Beschreibung des bevorzugten Ausführungsbeispiels

Die erfindungsgemäße Vorrichtung 11 und das erfindungsgemäße Verfahren werden nachstehend mit Bezug auf die beiliegenden Figuren im Detail beschrieben.

Die in Fig. 1 schematisch dargestellte Vorrichtung 11 ist konfiguriert, um Folien 1 z.B. aus Metall, insbesondere Edelstahl, nach dem erfindungsgemäßen Verfahren in dreidimensional strukturierte Flächenbauteile 2, wie Bipolarhalbplatten oder Bipolarplatten umzuformen. Solche Bipolarplatten werden beispielsweise in Brennstoffzellen eingesetzt.

Mit der erfindungsgemäßen Vorrichtung 11 wird ein Abschnitt A der Folie 1 mit einer Zugspannung beaufschlagt und unter Erzeugung einer dreidimensionalen Struktur 2a umgeformt. Dabei wird die Folie 1 kontinuierlich entlang der Förderrichtung F durch den Umformbereich gefördert.

Die Förderrichtung F der Folie 1 durch die Vorrichtung 11 ist durch Pfeile angezeigt und verläuft in Fig. 1 von rechts nach links.

Zur Erläuterung des Aufbaus und der Funktionsweise der erfindungsgemäßen Vorrichtung 11 werden nacheinander die einzelnen Einrichtungen beschrieben, die zu der erfindungsgemäßen Vorrichtung 11 gehören.

Als zentrale Umformeinrichtung 3 bzw. Walzstufe dient ein Prägewalzenpaar mit gegenläufig rotierenden Prägewalzen 3a, 3b. Diese Prägewalzen 3a, 3b bilden einen Walzenspalt und umfassen korrespondierende Prägeprofile 3c, 3d. Bei Förderung der Folie 1 durch den Walzenspalt prägen die Prägewalzen 3a, 3b die dreidimensionale Struktur 2a in die Folie 1 ein.

Damit die Folie 1 im Bereich der Umformeinrichtung 3 in Förderrichtung F gespannt ist, wird die Folie 1 der Umformeinrichtung 3 mit einer in Förderrichtung F vorgelagerten Zuführeinrichtung 4 zugeführt und mit einer in Förderrichtung F nachgelagerten Abfördereinrichtung 4 abgefördert.

Die Zuführeinrichtung 4 umfasst ein Zuführwalzenpaar mit gegenläufig rotierenden Zuführwalzen 4a, 4b, die einen Walzenspalt bilden und bei Förderung der Folie 1 durch den Walzenspalt eine Zugkraft entgegen der Förderrichtung auf die Folie 1 ausüben können.

Die Abfördereinrichtung 5 umfasst hingegen ein Wegführwalzenpaar mit gegenläufig rotierenden Wegführwalzen 5a, 5b, die einen Walzenspalt bilden und bei Förderung der Folie 1 durch den Walzenspalt eine Zugkraft in Förderrichtung auf die Folie 1 ausüben können.

Um die Folie 1 im Bereich der Umformeinrichtung 3 zusätzlich auch quer zur Förderrichtung F zu spannen, wird mittels einer der Umformeinrichtung 3 in Förderrichtung F vorgelagerten Querspannvorrichtung 6 eine sich kontinuierlich in Förderrichtung F erstreckende, zweidimensionale Längsstruktur 2b in der Folie 1 erzeugt. Dies geschieht z.B. mit einem Formwalzenpaar mit gegenläufig rotierenden Formwalzen 6a, 6b. Diese Formwalzen 6a, 6b bilden einen Walzenspalt und üben bei Förderung der Folie 1 durch den Walzenspalt eine quer zur Förderrichtung wirkende Zugkraft auf die Folie 1 aus.

Alternativ oder ergänzend zu der Querspannvorrichtung 6 kann die Vorrichtung 1 eine Andrückeinrichtung 7 aufweisen, die den Randbereich der Metallfolie 1 an die obere Prägewalze 3a andrückt und dabei aus der Folienebene biegt.

Mit einer Schneideinrichtung (nicht dargestellt) kann die umgeformte Folie 1 in dreidimensional strukturierte Flächenbauteile 2 zerteilt werden.

Diese Vorrichtung 11 dient insbesondere zur Herstellung von dünnen strukturierten Folien 2 bzw. Blechen, die für die Anwendung als Bipolarhalbplatte bzw. Bipolarplatte für Brennstoffzellen geeignet sind.

Nach dem offenbarten Erfindungsprinzip werden diese strukturierten Flächenbauteile 2 durch ein kontinuierliches Umformverfahren hergestellt. In diesem Ausführungsbeispiel wird das technologische Teilverfahren Walzprägen zur umformtechnischen Strukturierung der Folie 1 mit weiteren, teilweise optionalen Teilverfahren bzw. Anlagenbestandteilen ergänzt. Dazu zählen die Einzugswalzen 4a, 4b zur Abstreckung der Folie 1 in Längsrichtung F, die Formwalzen 6a, 6b und 7 zum Abkanten, Um- oder Nachformen oder Andrücken von Teilbereichen des Folienbandes 1 simultan zu oder vor dem Strukturieren, sowie die Wegführ- bzw. Transportwalzen 5a, 5b.

Die umformtechnische Strukturierung erfolgt durch die synchron zueinander laufenden Walzen 3a, 3b; 4a, 4b; 5a, 5b in einem unter Zugspannung stehenden Abschnitt der Folie 1. Zur Beaufschlagung der Folie 1 mit der Zugspannung in Förderrichtung F bzw. Längsrichtung wird die Folie 1 zwischen den Wegführwalzen 5a, 5b und Einzugswalzen bzw. Zuführwalzen 4a, 4b durch Klemmung gespannt. Die Zugspannung wird eingeleitet durch ein Bremsmoment in mindestens einem der Walzenpaare 4a, 4b; 5a, 5b. Dadurch wird eine Abstreckung der Folie 1 zur Eindämmung von Faltenbildung und Verbesserung der Rückfederung erzielt.

Zusätzlich kann die Zuführung der Folie 1 zur Walzenspaltebene E der Prägewalzen 3a, 3b in einem Winkelbereich von 0 bis 180, vorzugsweise 0 bis 90° verändert werden. Die technische Umsetzung erfolgt durch eine Schrägzuführung der Folie 1 z.B. aufgrund einer entsprechenden Anordnung bzw. Positionierung vorgelagerter Walzenpaare 6a, 6b; 4a, 4b bzw. durch Umlenkwalzen oder höher positionierte, vorgelagerte Walzenpaare. Mit zunehmendem Zuführwinkel α der Folie 1 zur Walzenspaltebene E der Prägewalzen 3a, 3b legt sich die Folie 1 zunehmend um die Prägewalze 3a, die Strukturvertiefungen beinhaltet, an. Dadurch werden exzessive Falten vor dem Walzspalt der Prägewalzen 3a, 3b durch den verfrühten Eingriff derjenigen Prägewalze mit Strukturerhebungen 3b vermieden.

Zur Beaufschlagung der Folie 1 mit einer Zugspannung in Bandbreitenrichtung bzw. einer Querzugspannung quer bzw. senkrecht zur Förderrichtung F werden einer der oder beide Folienlängsränder abgestellt oder abgekantet, um einen Winkel zur Folienebene zu bilden. Alternativ oder zusätzlich kann/können durch vorgelagerte Formwalzen 6a, 6b und/oder durch seitliche Form- bzw. Andrückwalzen 7 simultan zu den Prägewalzen 3a, 3b eine Vertiefung in Längsrichtung in der Folie 1 einprägt, eingewalzt oder in anderer Weise eingeformt werden. Dadurch wird die Folie 1 zur Eindämmung von Faltenbildung und Verbesserung der Rückfederung in Breitenrichtung abgestreckt.

Das erfindungsgemäße Verfahren eignet sich für alle Metall- oder Kunststofffolien, insbesondere für Foliendicken kleiner 1,0 mm.

Ein wesentlicher Vorteil des vorliegenden Ausführungsbeispiels besteht also darin, dass die Vorrichtung 11 eine Zugkraft auf die Folie 1 sowohl in Förderrichtung F als auch quer bzw. senkrecht dazu aufbringen kann. Dabei kann die resultierende Zugkraftgröße und -orientierung unter Nutzung von wenigstens einem Sensor kontinuierlich überwacht werden. Die Messwerte können genutzt werden, um über ein Regelsystem die Prozessparameter zu optimieren, um den Umformprozess zu überwachen.

Die Zugkraft auf die Folie 1 kann über Reibkräfte oder über Haltemomente oder über zusätzliche Abstellelemente in Querrichtung aufgebracht werden. Als Abstellelement (vgl. Fig. 2) kann an der Prägewalze 3a eine seitliche Andrückwalze 7 vorgesehen sein. Alternativ oder zusätzlich können separate oder gekoppelte Walzensysteme 6a, 6b oder passiv ausgeführte Leitelemente bereitgestellt werden.

In Summe bietet die Erfindung den Vorteil einer wirtschaftlichen Produktion von dünnwandigen, strukturierten Bauteilen in großen Stückzahlen, d.h. für die Massenfertigung.

Die Erfindung ist jedoch nicht auf die Herstellung von Bipolarhalbplatten bzw. Bipolarplatten beschränkt durch Walzumformung. Nach dem erfindungsgemäßen Prinzip lassen sich Folien für beliebige Anwendungen auch mit anderen Umformverfahren mit einer dreidimensionalen Struktur versehen.

### Bezugszeichenliste

- 1: Folie
- 2: Dreidimensional strukturiertes Flächenelement
- 2a: Dreidimensionale Struktur
- 3: Umformeinrichtung
- 3a, b: Prägewalzenpaar der Umformeinrichtung
- 3c, d: Prägestruktur und Gegenstruktur der Umformeinrichtung (Patrize und Matrize)
- 3e, f: Drehachsen der Prägewalzen
- 4: Zuführeinrichtung
- 4a, b: Walzenpaar der Zuführeinrichtung
- 5: Abfördereinrichtung
- 5a, b: Walzenpaar der Abfördereinrichtung
- 6: Formgebungseinrichtung
- 6a, b: Walzenpaar der Formgebungseinrichtung
- 7: Andrückwalze
- 7a: Drehachse der Andrückwalze
- 10: Vorratsrolle
- 11: Vorrichtung
- A: Mit Zugspannung beaufschlagter Abschnitt der Folie
- E: Ebene des Walzenspaltes der Prägewalzen
- F: Förderrichtung
- α: Zuführwinkel der Folie zur Ebene des Walzenspaltes
- β: Umschlingungswinkel der Folie bzgl. einer Drehachse einer Prägewalze

## Patentansprüche

1. Verfahren zur Umformung von Folien (1) in dreidimensional strukturierte Flächenbauteile (2), insbesondere in Bipolarplatten für Brennstoffzellen, wobei wenigstens ein Abschnitt (A) einer Folie (1) mit einer Zugspannung beaufschlagt und unter Erzeugung einer dreidimensionalen Struktur (2a) umgeformt wird, wobei die Folie (1) während der Umformung kontinuierlich entlang einer Förderrichtung (F) gefördert wird, wobei zur Beaufschlagung der Folie (1) mit der Zugspannung eine Zugkraft in Förderrichtung (F) auf die Folie aufgebracht wird, und wobei die dreidimensionale Struktur (2a) eine unebene Struktur ist, die in Förderrichtung der Folie uneinheitlich ist, **dadurch gekennzeichnet, dass** zur Beaufschlagung der Folie (1) mit der Zugspannung eine Zugkraft quer zu der Förderrichtung (F) auf die Folie (1) aufgebracht wird.

2. Verfahren nach einem der vorangehenden Ansprüche, **dadurch gekennzeichnet, dass** eine auf die Folie (1) wirkende Zugkraft oder Zugspannung sensorisch überwacht wird, vorzugsweise geregelt wird, bevorzugt nach Betrag und/oder Richtung.

3. Verfahren nach einem der vorangehenden Ansprüche, **dadurch gekennzeichnet, dass** die Umformung durch Walzen, insbesondere durch Prägewalzen, erfolgt, vorzugsweise in wenigstens einem Walzenspalt eines Walzenpaars (3a, 3b), wobei bevorzugt ein Zuführwinkel (α) der Folie (1) zu einer Ebene (E) dieses Walzenspalts und/oder ein Umschlingungswinkel (β) um eine der Prägewalzen im Bereich zwischen 0 und 180°, vorzugsweise im Bereich zwischen 0 und 90° liegt, wobei der Zuführwinkel (α) und/oder der Umschlingungswinkel (β) besonders bevorzugt verstellbar ist/sind, insbesondere, um eine Faltenbildung der Folie (1) zu verhindern.

4. Verfahren nach einem der vorangehenden Ansprüche, **dadurch gekennzeichnet, dass** der Abschnitt (A) der Folie (1) zur Beaufschlagung mit einer in Förderrichtung (F) wirkenden Zugspannung zwischen zwei Spannvorrichtungen (4, 5) gespannt wird, wobei jede der Spannvorrichtungen (4, 5) vorzugsweise als Walzenpaar (4a, 4b; 5a, 5b) ausgebildet ist, welches die Folie (1) bevorzugt durch den zwischen gegenläufig rotierenden Walzen (4a, 4b; 5a, 5b) gebildeten Walzenspalt in Förderrichtung (F) fördert, besonders bevorzugt mit unterschiedlichen Fördergeschwindigkeiten.

5. Verfahren nach einem der vorangehenden Ansprüche, **dadurch gekennzeichnet, dass** die Folie (1) zur Beaufschlagung mit einer quer zur Förderrichtung (F) wirkenden Zugspannung mit einer sich kontinuierlich in Förderrichtung (F) erstreckenden, zweidimensionalen Längsstruktur versehen wird, wobei die zweidimensionale Längsstruktur eine unebene Struktur ist, die in Förderrichtung der Folie einheitlich ist, und wobei die Folie (1) vorzugsweise an einem der oder an beiden Längsrändern gefalzt wird und/oder an wenigstens einen konisch geformten Abschnitt einer Förderwalze (3a), bevorzugt einer die umformtechnische Strukturierung bewirkenden Prägewalze (3a), angedrückt wird, besonders bevorzugt mittels einer Andrückwalze (7).

6. Verfahren nach dem vorangehenden Anspruch, **dadurch gekennzeichnet, dass** die Andrückwalze (7) zur Veränderung der auf die Folie (1) wirkenden Zugspannung entlang und/oder quer zu deren Rotationsachse (7a) verstellt wird, wobei die Rotationsachse (7a) der Andrückwalze (7) vorzugsweise exakt oder näherungsweise senkrecht zu einer Ebene, in welcher die Folie (1) der Förderwalze (3a) zugeführt wird, ausrichtbar ist.

7. Verfahren nach einem der vorangehenden Ansprüche, **dadurch gekennzeichnet, dass** als Folie (1) eine Metallfolie, vorzugsweise eine Edelstahlfolie, bevorzugt eine beschichtete Edelstahlfolie verwendet wird, vorzugsweise mit einer Dicke von bis zu 1 mm.

8. Verfahren nach einem der vorangehenden Ansprüche, **dadurch gekennzeichnet, dass** die dreidimensionale Struktur (2a) entlang der Förderrichtung (F) uneinheitlich ist, wobei die dreidimensionale Struktur (2a) vorzugsweise wenigstens eines der folgenden Elemente aufweist: Kanäle, Vertiefungen, Dome, Noppen, Stützstrukturen.

9. Verfahren nach einem der vorangehenden Ansprüche, **dadurch gekennzeichnet, dass** die Folie (1), vorzugsweise nach der umformtechnischen Strukturierung, in einzelne Flächenbauteile (2) zerteilt wird, bevorzugt durch quer zur Förderrichtung (F) verlaufende Schnitte.

10. Vorrichtung (11) zur Umformung von Folien (1) in dreidimensional strukturierte Flächenbauteile (2), insbesondere in Bipolarplatten zur Verwendung in Brennstoffzellen, vorzugsweise unter Ausführung des Verfahrens nach einem der vorangehenden Ansprüche, wobei die Vorrichtung konfiguriert ist, um einen Abschnitt (A) der Folie (1) mit einer Zugspannung zu beaufschlagen sowie unter Erzeugung der dreidimensionalen Struktur (2a) umzuformen, wobei die Vorrichtung (11) konfiguriert ist, um die Folie (1) kontinuierlich entlang der Förderrichtung (F) zu fördern, wobei die Vorrichtung konfiguriert ist zur Beaufschlagung der Folie (1) mit einer Zugspannung in Förderrichtung (F), und wobei die dreidimensionale Struktur (2a) eine unebene Struktur ist, die in Förderrichtung der Folie uneinheitlich ist, **gekennzeichnet durch** eine Querspannvorrichtung (6) zur Beaufschlagung der Folie (1) mit einer Zugspannung quer zur Förderrichtung (F).

11. Vorrichtung (11) nach dem vorangehenden Anspruch, umfassend wenigstens eine der folgenden Einrichtungen:
a. Eine Umformeinrichtung (3) zur Erzeugung der dreidimensionalen Struktur (2a) durch Umformung der Folie (1), vorzugsweise eine Prägewalzeinrichtung (3), bevorzugt ein Prägewalzenpaar mit gegenläufig rotierenden Prägewalzen (3a, 3b) mit korrespondierenden Prägeprofilen (3c, 3d), wobei die Prägewalzen (3a, 3b) besonders bevorzugt einen Walzenspalt bilden und bei Förderung der Folie (1) durch den Walzenspalt die dreidimensionale Struktur (2a) in die Folie einprägen.
b. Eine Zuführeinrichtung (4) zur Zuführung der Folie (1) zur Umformeinrichtung (3), vorzugsweise eine Zuführwalzeinrichtung (4), bevorzugt ein Zuführwalzenpaar mit gegenläufig rotierenden Zuführwalzen (4a, 4b), die einen Walzenspalt bilden und bei Förderung der Folie (1) durch den Walzenspalt eine Zugkraft entgegen der Förderrichtung auf die Folie (1) ausüben, wobei bevorzugt die Zuführwalzvorrichtung (4) der Umformeinrichtung (3) in Förderrichtung (F) der Folie (1) vorgelagert ist.
c. Eine Abfördereinrichtung (5) zum Abfördern der Folie (1) von der Umformeinrichtung (3), vorzugsweise eine Wegführwalzeinrichtung (5), bevorzugt ein Wegführwalzenpaar mit gegenläufig rotierenden Wegführwalzen (5a, 5b), die einen Walzenspalt bilden und bei Förderung der Folie (1) durch den Walzenspalt eine Zugkraft in Förderrichtung auf die Folie (1) ausüben, wobei bevorzugt die Wegführwalzvorrichtung (5) der Umformeinrichtung (3) in Förderrichtung der Folie (1) nachgelagert ist.
d. Eine Formwalzeinrichtung (6), bevorzugt ein Formwalzenpaar mit gegenläufig rotierenden Formwalzen (6a, 6b), die einen Walzenspalt bilden und bei Förderung der Folie (1) durch den Walzenspalt eine quer zur Förderrichtung wirkende Zugkraft auf die Folie (1) ausüben, vorzugsweise durch Erzeugen einer sich kontinuierlich in Förderrichtung erstreckenden, zweidimensionalen Längsstruktur (2b) in der Folie (1), wobei die zweidimensionale Längsstruktur eine unebene Struktur ist, die in Förderrichtung der Folie einheitlich ist, wobei bevorzugt die Querspannvorrichtung (6) der Umformeinrichtung (3) in Förderrichtung der Folie (1) vorgelagert ist.
e. Wenigstens eine Andrückeinrichtung (7), die dazu konfiguriert sind, den Randbereich der Metallfolie (1) zu klemmen und zu führen, wobei eine Rotationsachse (7a) einer Andrückwalzen (7) sich von der Richtung der Rotationsachse (3e, 3f) der Prägewalzvorrichtung (3) unterscheidet.
f. Eine Schneideinrichtung, um die Folie (1) in dreidimensional strukturierte Flächenbauteile (2) zu zerschneiden.
g. Eine Einrichtung zur Verstellung des Zuführwinkels (α) der Folie zur Ebene (E) des Walzenspalts und/oder zur Verstellung des Umschlingungswinkels (β) der Folie (1) bezüglich einer Drehachse einer Prägewalze (3c, 3d), insbesondere der negativ geformten Prägewalze (3c).
h. Eine Messeinrichtung zur Überwachung wenigstens eines Prozess und/oder Qualitätsparameters wenigstens einer der vorstehend genannten Einrichtungen (3, 4, 5, 6), vorzugsweise Drehzahl, Drehmoment, Zuführwinkel, Umschlingungswinkel, Folienfaltenbildung oder Zugkraft.
i. Eine Einrichtung zur Regelung und/oder Steuerung, insbesondere zur Synchronisation, der Prozessparameter wenigstens einer der vorstehend genannten Einrichtungen (3, 4, 5, 6), vorzugsweise Drehzahl, Drehmoment und/oder zur Optimierung der Prozessparameter durch Anpassung der Steuerung basierend auf den Messwerten der Messeinrichtung.

## Claims

1. A method for forming films (1) into three-dimensionally structured planar components (2), in particular into bipolar plates for fuel cells, wherein at least one section (A) of a film (1) is subjected to tensile stress and is formed to create a three-dimensional structure (2a), wherein the film (1) is continuously conveyed along a conveying direction (F) during the forming, wherein a tensile force is applied to the film (1) in the conveying direction (F) to subject the film (1) to the tensile stress, and wherein the three-dimensional structure (2a) is an uneven structure that is non-uniform in the conveying direction of the film, **characterized in that**, in order to apply tensile stress to the film (1), a tensile force is applied to the film (1) transverse to the transport direction (F).

2. The method according to one of the preceding claims, **characterized in that** a tensile force or tensile stress acting on the film (1) is monitored by sensors, preferably controlled, preferably in terms of magnitude and/or direction.

3. The method according to one of the preceding claims, **characterized in that** the forming is performed by rolling, in particular by embossing rollers, preferably in at least one roller gap of a pair of rollers (3a, 3b), wherein preferably a feed angle (α) of the film (1) relative to a plane (E) of this roller gap and/or a wrap angle (β) around one of the embossing rolls lies in the range between 0 and 180°, preferably in the range between 0 and 90°, wherein the feed angle (α) and/or the wrap angle (β) is/are particularly preferably adjustable, in particular to prevent wrinkling of the film (1).

4. The method according to any one of the preceding claims, **characterized in that** the section (A) of the film (1) is stretched between two tensioning devices (4, 5) to be subjected to a tensile stress acting in the conveying direction (F), wherein each of the tensioning devices (4, 5) is preferably formed as a pair of rollers (4a, 4b; 5a, 5b), which conveys the film (1) in the conveying direction (F) preferably through the nip formed between counter-rotating rollers (4a, 4b; 5a, 5b), particularly preferably at different conveying speeds.

5. The method according to any one of the preceding claims, **characterized in that** the film (1) is provided with a two-dimensional longitudinal structure extending continuously in the conveying direction (F) in order to be subjected to a tensile stress acting transversely to the conveying direction (F), wherein the two-dimensional longitudinal structure is an uneven structure, which is uniform in the forward direction of the film, and wherein the film (1) is preferably folded at one or both of its longitudinal edges and/or is pressed against at least one conically shaped section of a conveyor roller (3a), preferably an embossing roller (3a) that effects the forming-related structuring, particularly preferably by means of a pressure roller (7).

6. The method according to the preceding claim, **characterized in that** the pressure roller (7) is adjusted along and/or across its axis of rotation (7a) to alter the tensile stress acting on the film (1), wherein the axis of rotation (7a) of the pressure roller (7) is preferably aligned exactly or approximately perpendicular to a plane in which the film (1) is fed to the conveyor roller (3a).

7. The method according to one of the preceding claims, **characterized in that** a metal foil, preferably a stainless steel foil, and more preferably a coated stainless steel foil, is used as the foil (1), preferably with a thickness of up to 1 mm.

8. The method according to one of the preceding claims, **characterized in that** the three-dimensional structure (2a) is non-uniform along the conveying direction (F), wherein the three-dimensional structure (2a) preferably comprises at least one of the following elements: channels, recesses, domes, nubs, support structures.

9. The method according to one of the preceding claims, **characterized in that** the foil (1), preferably after the forming process, is divided into individual flat components (2), preferably by cuts running transverse to the conveying direction (F).

10. Apparatus (11) for forming films (1) into three-dimensionally structured surface components (2), in particular into bipolar plates for use in fuel cells, preferably by carrying out the method according to one of the preceding claims, wherein the apparatus is configured to apply a tensile stress to a section (A) of the film (1) with a tensile stress and to form it while creating the three-dimensional structure (2a), wherein the device (11) is configured to continuously convey the film (1) along the conveying direction (F), wherein the device is configured to apply a tensile stress to the film (1) in the conveying direction (F), and wherein the three-dimensional structure (2a) is an uneven structure that is non-uniform in the conveying direction of the film, **characterized by** a transverse tensioning device (6) for applying a tensile stress to the film (1) transverse to the conveying direction (F).

11. The apparatus (11) according to the preceding claim, comprising at least one of the following features:
a. A forming device (3) for producing the three-dimensional structure (2a) by forming the film (1), preferably an embossing roller device (3), more preferably a pair of embossing rollers with counter-rotating embossing rollers (3a, 3b) with corresponding embossing profiles (3c, 3d), wherein the embossing rollers (3a, 3b) particularly preferably form a roller gap and, as the film (1) is conveyed through the roller gap, emboss the three-dimensional structure (2a) into the film.
b. A feed device (4) for feeding the film (1) to the forming device (3), preferably a feed roller device (4), more preferably a pair of feed rollers with counter-rotating feed rollers (4a, 4b) that form a roller gap and, as the film (1) is conveyed through the roller gap, exert a tensile force on the film (1) in the direction opposite to the conveying direction, wherein the feed roller device (4) is preferably located upstream of the forming device (3) in the conveying direction (F) of the film (1).
c. A discharge device (5) for discharging the film (1) from the forming device (3), preferably a discharge roller device (5), preferably a pair of discharge rollers with counter-rotating discharge rollers (5a, 5b) that form a roller gap and, as the film (1) is conveyed through the roller gap, exert a tensile force on the film (1) in the conveying direction, wherein the discharge roller device (5) is preferably located downstream of the forming device (3) in the conveying direction of the film (1).
d. A forming roller device (6), preferably a pair of forming rollers with counter-rotating forming rollers (6a, 6b) that form a roller gap and, as the film (1) is conveyed through the roller gap, exert a tensile force on the film (1) acting transversely to the conveying direction, preferably by generating a two-dimensional longitudinal structure (2b) in the film (1) that extends continuously in the conveying direction, wherein the two-dimensional longitudinal structure is an even structure that is uniform in the conveying direction of the film, wherein the transverse tensioning device (6) is preferably located upstream of the forming device (3) in the conveying direction of the film (1).
e. At least one pressing device (7) configured to clamp and guide the edge region of the metal foil (1), wherein a rotational axis (7a) of a pressing roller (7) differs from the direction of the rotational axis (3e, 3f) of the embossing roller device (3).
f. A cutting device for cutting the foil (1) into three-dimensionally structured surface components (2).
g. A device for adjusting the feed angle (α) of the foil relative to the plane (E) of the roller gap and/or for adjusting the wrap angle (β) of the foil (1) relative to an axis of rotation of an embossing roll (3c, 3d), in particular the negatively shaped embossing roll (3c).
h. A measuring device for monitoring at least one process and/or quality parameter of at least one of the aforementioned devices (3, 4, 5, 6), preferably rotational speed, torque, feed angle, wrap angle, film wrinkling, or tensile force.
i. A device for regulating and/or controlling, in particular for synchronizing, the process parameters of at least one of the aforementioned devices (3, 4, 5, 6), preferably rotational speed, torque, and/or for optimizing the process parameters by adjusting the control based on the measured values from the measuring device.

## Revendications

1. Procédé de formage de feuilles (1) en éléments de surface à structure tridimensionnelle (2), en particulier en plaques bipolaires pour piles à combustible, dans lequel au moins une section (A) d'une feuille (1) est soumise à une contrainte de traction et formée pour créer une structure tridimensionnelle (2a), dans lequel la feuille (1) est transportée en continu selon une direction de transport (F) pendant le formage, dans lequel une force de traction est appliquée à la feuille (1) dans la direction de transport (F) pour soumettre la feuille à la contrainte de traction, et dans lequel la structure tridimensionnelle (2a) est une structure irrégulière qui est non uniforme dans la direction de transport de la feuille,
**caractérisé en ce qu'**une force de traction est appliquée à la feuille (1) transversalement à la direction de transport (F) afin de soumettre la feuille (1) à la contrainte de traction.

2. Procédé selon l'une des revendications précédentes, **caractérisé en ce qu'**une force de traction ou une contrainte de traction agissant sur la feuille (1) est surveillée par des capteurs et est préférablement régulée, de préférence en grandeur et/ou en direction.

3. Procédé selon l'une des revendications précédentes, **caractérisé en ce que** le formage est effectué par des rouleaux, en particulier par des rouleaux de gaufrage, préférablement dans au moins un espace entre rouleaux entre une paire de rouleaux (3a, 3b), dans lequel l'angle d'alimentation (α) de la feuille (1) par rapport à un plan (E) de cet espace entre rouleaux et/ou un angle d'enroulement (β) autour de l'un des rouleaux de gaufrage est de préférence compris entre 0° et 180°, et préférablement entre 0° et 90°, dans lequel l'angle d'alimentation (α) et/ou l'angle d'enroulement (β) sont particulièrement de préférence réglables, en particulier pour éviter un plissement de la feuille (1).

4. Procédé selon l'une des revendications précédentes, **caractérisé en ce que** la section (A) de la feuille (1) est tendue entre deux dispositifs de contrainte (4, 5) pour la soumettre à une contrainte de traction agissant dans la direction de transport (F), dans lequel chacun des dispositifs de contrainte (4, 5) est préférablement conçu comme une paire de rouleaux (4a, 4b ; 5a, 5b) qui transporte de préférence la feuille (1) à travers l'espace entre rouleaux formé entre les rouleaux contrarotatifs (4a, 4b ; 5a, 5b) dans la direction de transport (F), particulièrement de préférence avec des vitesses de transport différentes.

5. Procédé selon l'une des revendications précédentes, **caractérisé en ce que** la feuille (1) est dotée d'une structure longitudinale bidimensionnelle s'étendant en continu dans la direction de transport (F) pour la soumettre à une contrainte de traction agissant transversalement à la direction de transport (F), dans lequel la structure longitudinale bidimensionnelle est une structure irrégulière qui est uniforme dans la direction de transport de la feuille, et dans lequel la feuille (1) est préférablement pliée sur un des bords longitudinaux ou sur les deux bords longitudinaux et/ou est pressée contre au moins une section de forme conique d'un rouleau de transport (3a), de préférence un rouleau de gaufrage (3a) qui effectue la structuration technique de formage, particulièrement de préférence au moyen d'un rouleau de pression (7).

6. Procédé selon la revendication précédente, **caractérisé en ce que** le rouleau de pression (7) est réglé le long de son axe de rotation (7a) et/ou transversalement à celui-ci pour modifier la contrainte de traction agissant sur la feuille (1), dans lequel l'axe de rotation (7a) du rouleau de pression (7) peut préférablement être aligné exactement ou approximativement perpendiculaire à un plan dans lequel la feuille (1) est alimentée au rouleau de transport (3a).

7. Procédé selon l'une des revendications précédentes, **caractérisé en ce que** la feuille (1) est une feuille métallique, préférablement une feuille d'acier inoxydable, de préférence une feuille d'acier inoxydable revêtue, préférablement d'une épaisseur allant jusqu'à 1 mm.

8. Procédé selon l'une des revendications précédentes, **caractérisé en ce que** la structure tridimensionnelle (2a) n'est pas uniforme le long de la direction de transport (F), dans lequel la structure tridimensionnelle (2a) comprend préférablement au moins l'un des éléments suivants : des canaux, des dépressions, des dômes, des bosses et des structures de support.

9. Procédé selon l'une des revendications précédentes, **caractérisé en ce que** la feuille (1), préférablement après la structuration technique de formage, est divisée en éléments de surface individuels (2), de préférence par des sections transversales à la direction de transport (F).

10. Dispositif (11) pour former des feuilles (1) en éléments de surface à structure tridimensionnelle (2), en particulier en plaques bipolaires destinées à être utilisées dans des piles à combustible, préférablement en mettant en œuvre le procédé selon l'une des revendications précédentes, dans lequel le dispositif est configuré pour soumettre une section (A) de la feuille (1) à une contrainte de traction et la former en créant la structure tridimensionnelle (2a), dans lequel le dispositif (11) est configuré pour transporter la feuille (1) en continu le long de la direction de transport (F), dans lequel le dispositif est configuré pour soumettre la feuille (1) à une contrainte de traction dans la direction de transport (F), et dans lequel la structure tridimensionnelle (2a) est une structure irrégulière qui n'est pas uniforme dans la direction de transport de la feuille,
**caractérisé par** un dispositif de contrainte transversale (6) pour soumettre la feuille (1) à une contrainte de traction transversalement à la direction de transport (F).

11. Dispositif (11) selon la revendication précédente, comprenant au moins l'un des dispositifs suivants :
a. un dispositif de formage (3) pour créer la structure tridimensionnelle (2a) en formant la feuille (1), préférablement un dispositif à rouleaux de gaufrage (3), de préférence une paire de rouleaux de gaufrage avec des rouleaux de gaufrage contrarotatifs (3a, 3b) ayant des profils de gaufrage correspondants (3c, 3d), dans lequel les rouleaux de gaufrage (3a, 3b) forment particulièrement de préférence un espace entre rouleaux et, lors du transport de la feuille (1) à travers l'espace entre rouleaux, gaufrent la structure tridimensionnelle (2a) dans la feuille ;
b. un dispositif d'alimentation (4) pour alimenter la feuille (1) au dispositif de formage (3), préférablement un dispositif à rouleaux d'alimentation (4), de préférence une paire de rouleaux d'alimentation avec des rouleaux d'alimentation contrarotatifs (4a, 4b) qui forment un espace entre rouleaux et exercent une force de traction sur la feuille (1) à l'encontre de la direction de transport lors du transport de la feuille (1) à travers l'espace entre rouleaux, dans lequel le dispositif à rouleaux d'alimentation (4) est positionné de préférence en amont du dispositif de formage (3) dans la direction de transport (F) de la feuille (1) ;
c. un dispositif d'évacuation (5) pour évacuer la feuille (1) du dispositif de formage (3), préférablement un dispositif à rouleaux d'évacuation (5), de préférence une paire de rouleaux d'évacuation avec des rouleaux d'évacuation contrarotatifs (5a, 5b) qui forment un espace entre rouleaux et exercent une force de traction sur la feuille (1) dans la direction de transport lors du transport de la feuille (1) à travers l'espace entre rouleaux, dans lequel le dispositif à rouleaux d'évacuation (5) est situé de préférence en aval du dispositif de formage (3) dans la direction de transport de la feuille (1) ;
d. un dispositif à rouleaux de formage (6), de préférence une paire de rouleaux de formage avec des rouleaux de formage contrarotatifs (6a, 6b) qui forment un espace entre rouleaux et exercent une force de traction sur la feuille (1) qui agit transversalement à la direction de transport lorsque la feuille (1) est transportée à travers l'espace entre rouleaux, en créant préférablement dans la feuille (1) une structure longitudinale bidimensionnelle (2b) qui s'étend en continu dans la direction de transport, dans lequel la structure longitudinale bidimensionnelle est une structure irrégulière qui est uniforme dans la direction de transport de la feuille, dans lequel le dispositif de contrainte transversale (6) du dispositif de formage (3) est positionné de préférence en amont dans la direction de transport de la feuille (1) ;
e. au moins un dispositif de pression (7) configuré pour serrer et guider la zone de bord de la feuille métallique (1), dans lequel un axe de rotation (7a) d'un rouleau de pression (7) diffère de la direction de l'axe de rotation (3e, 3f) du dispositif à rouleaux de gaufrage (3) ;
f. un dispositif de découpe pour découper la feuille (1) en éléments de surface à structure tridimensionnelle (2) ;
g. un dispositif de réglage de l'angle d'alimentation (α) de la feuille par rapport au plan (E) de l'espace entre rouleaux et/ou de réglage de l'angle d'enroulement (β) de la feuille (1) par rapport à un axe de rotation d'un rouleau de gaufrage (3c, 3d), en particulier du rouleau de gaufrage à forme négative (3c) ;
h. un dispositif de mesure pour surveiller au moins un paramètre de processus et/ou de qualité d'au moins l'un des dispositifs susmentionnés (3, 4, 5, 6), préférablement la vitesse de rotation, le couple, l'angle d'alimentation, l'angle d'enroulement, le plissement de la feuille ou la force de traction ;
i. un dispositif pour réguler et/ou contrôler, en particulier pour une synchronisation, les paramètres de processus d'au moins l'un des dispositifs susmentionnés (3, 4, 5, 6), soit préférablement la vitesse de rotation, le couple et/ou l'optimisation des paramètres de processus, en ajustant la commande en fonction des valeurs mesurées par le dispositif de mesure.
